# EUROPEAN PATENT APPLICATION

(11) **EP 3 597 410 A1**
(43) Date of publication of application: **22.01.2020**
(21) Application number: 18275103.2
(22) Date of filing: 20.07.2018
(51) Int. Cl.: B29C 70/30, B29C 53/82, B29C 53/56

(54) **COMPOSITE COMPONENT AND MANUFACTURE THEREOF**

(71) Applicant: Crompton Technology Group Limited, Solihul, West Midlands B90 4SS (GB)
(72) Inventor: LAZARUS, Simon, Oxfordshire, OX 16 4XD (GB); FAULKNER, Dale, West Midlands, DY9 8AH (GB)
(74) Representative: Dehns

(57) **Abstract**

A method of forming a composite component comprising: forming a mandrel by additive manufacturing, the mandrel defining a shape for the component; providing a composite material around the mandrel to form a body of the component; curing the component body to produce the component, the mandrel forming a part of the component.

## Description

### TECHNICAL FIELD

The present disclosure relates to composite components such as pipes or tubes, in particular, but not exclusively to pipes such as fuel pipes used in aircraft or the like and having a composite fibre structure.

### BACKGROUND

Composite pipes e.g. comprising glass or carbon fibre composite materials have become common in applications where the pipes may be subjected to extreme loads and conditions such as in aircraft. Aircraft fuel pipes, for example, are often composite pipes. Such composites are strong and stiff and less liable to breakage or fracture than conventionally used heavy metals whilst also being lighter. In extreme conditions, the composite pipes need to be resistant to damage due to the mechanical and environmental conditions. At the same time, manufacturers are under pressure to provide parts at lower cost and to provide lighter parts.

Composite components are conventionally formed by providing a mandrel or support structure in the general shape of the desired component. The composite is then wrapped around the mandrel to form the component and is then baked or cured to set the component.

As mentioned above, there is a need for such composite components to be as lightweight as possible and, in the case of pipes, the shape and surface of the interior is specially designed for the desired flow through the pipe. Mandrels are, conventionally, made of metal or strong plastic or, e.g. plaster, wood, sand or wax to provide the desired support, which, of course, adds to the overall weight of the component. Also, the presence of the mandrel within the pipe would affect the desired flow. It is important, therefore, for the mandrel to be removed before the component is finally ready for sale/use.

For simple tubular components, mandrels can be used that can be easily withdrawn from the composite structure after it has been formed to the desired shape. For more complex shaped components, however, this is more difficult or even impossible. Mandrels cannot be easily slid out of e.g. tubes with bends or humps or from angular components, the same applies for e.g. tubes that bifurcate or have varying diameters along their length. For these structures, the mandrel needs to be removed, e.g. by using a corrosive substance flushed through the component, or the mandrel can be made of wax and then melted for removal. With the latter process, the interior of the component then needs to be thoroughly cleaned after removal of the mandrel. The use of corrosive substances to remove the mandrel or strong cleaning fluids in the components, or the use of heat to melt a wax mandrel, can result in dimensional inaccuracies or surface features on the inside surface of the component, or leave residue substances. This can react with or affect the flow of fluids flowed through the component in a way that cannot be accurately calculated and compensated. In the case of fuel pipes, for example, it is important that there is no residue of a substance that might react with the fuel and cause combustion or change the composition of the fuel.

Another problem with conventional mandrels is that a mandrel is required for every component to be manufactured and for every size of component. In the case of removable mandrels, these are retained but require storage space. Storage is also required for the additional tooling required for such mandrels.

The costs associated with these conventional approaches in terms of complexity of manufacture, tooling costs and storage are also undesirably high.

There is, therefore, a need for a method of manufacturing components in a range of shapes and sizes whilst overcoming the above problems.

### SUMMARY

According to one aspect of the present disclosure, there is provided a method of forming a composite component comprising: forming a mandrel by additive manufacturing, the mandrel defining a shape for the component; providing a composite material around the mandrel to form a body of the component; curing the component body to produce the component, the mandrel forming a part of the component.

According to another aspect, there is provided a composite component comprising a mandrel defining a shape of the component, and a composite material formed around the mandrel.

Preferably, the step of providing comprises wrapping layers of composite material around the mandrel or fitting a sleeve of composite material over the mandrel.

### BRIEF DESCRIPTION OF THE DRAWINGS

Figs. 1A - 1C show examples according to this disclosure.
Fig. 2 is a cross-sectional view of a component formed according to the disclosure.

### DETAILED DESCRIPTION

The present disclosure makes use of the recent developments in the field of additive manufacturing or 3D printing. Considerable advances have been made in this area in recent years meaning that a wide range of 3D items can be formed by programming a shape into a computer controlling a 3D printer or using some other additive manufacturing technique to form a product according to the programmed design by printing layer upon layer of material. These processes have developed to such an extent that items can be additively manufactured in a range of materials and a wide range of shapes for a wide range of applications.

This disclosure focusses on forming a mandrel using additive manufacturing, which is able to be formed in a range of complex shapes, over which a composite component can be formed to produce a component in the desired shape. The mandrel, being additively manufactured from a lightweight material, is then left in place in the finished composite component, thus avoiding the problems discussed above in removing the mandrel.

The use of 3D printing and the fact that the mandrel is not removed from the finished product means that very complex shapes can be formed. Also, there is no limit to the variations that can be designed in terms of shape and dimensions but without the need for the storage space required for other tooled mandrels.

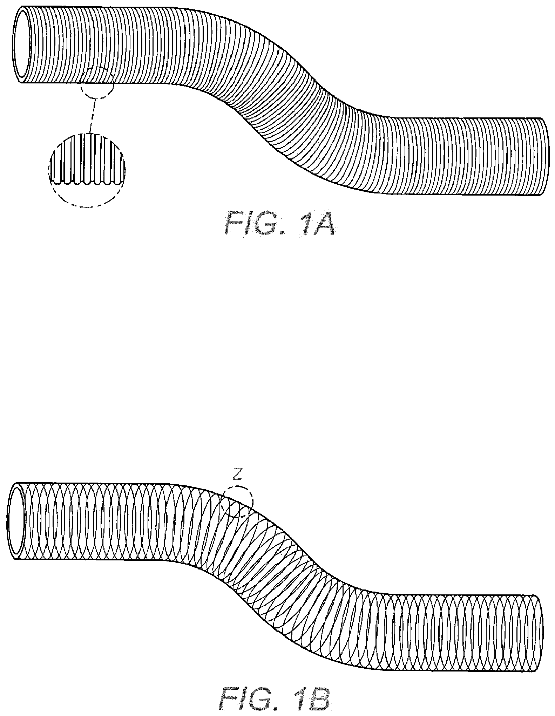

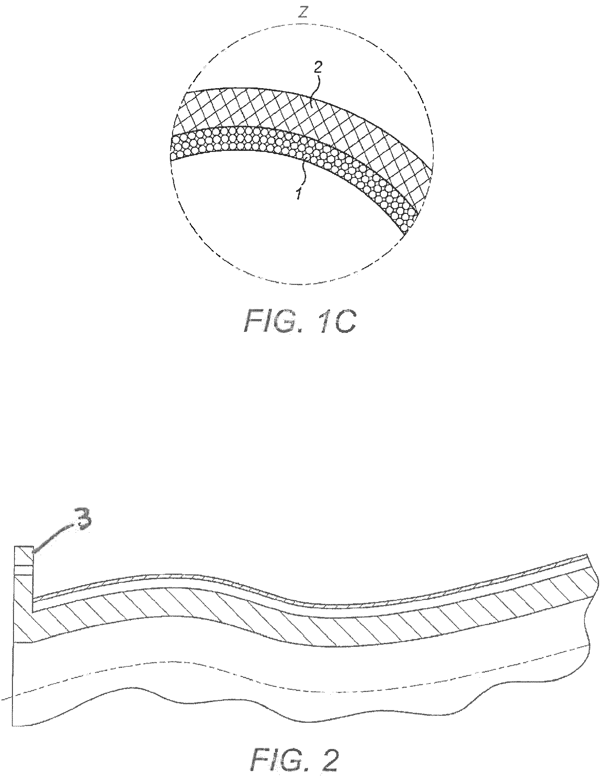

As seen in Figs. 1A to 1C, showing some shapes that might be required for various applications, the mandrel 1 can be 3D printed/additively manufactured as required producing a lightweight structure. The mandrel only needs to hold enough shape for composite materials to be wound around or drawn or formed over it to form the component, and to not break away causing debris within the component, but otherwise the mandrel does not need to have any real structural properties or strength.

The thin-walled mandrel 1 defines the complex component shape or form and composite material 2 is wound or mounted around the mandrel to form the component body. Any desired shape can be formed, meaning that components can be custom-made at relatively low cost and manufacturing complexity.

When composite layers are used to form components, the composite material comprises a combination of fibres and resin. The resin can, therefore, adhere to the mandrel so that nothing is displaced during manufacture. Adhesion may, however, in some cases not be desired, in which case the mandrel can be produced with a differing porosity and/or surface finish so that there is no structural adhesion between the composite layer and the mandrel. Alternatively, a layer of adhesive may be applied to the mandrel prior to winding for some applications.

The cross-section of the mandrel no longer needs to be restricted to circular. Oval, square or other desired profiles may be chosen, and at different parts of the component. The internal surface of the mandrel can be optimised for different applications, flow patterns etc. and the mandrel can be designed e.g. at its ends to be secured to holding chucks or connecters so that the mandrel can be turned whilst the composite layers are applied, or held in place, as required.

Various lightweight materials are used in additive manufacturing/3D printing already and developments continue - there is therefore a vast selection according to requirements/applications. Nylon is one example of a material that can be used for forming a mandrel in e.g. manufacture of aircraft components. These materials are also such that they will not be damaged by the temperatures required to bake or cure the composite layers.

It is also envisaged that components currently made of several parts - e.g. a tube with a flange 3 as shown in Fig. 2, could be formed in a single piece using these methods. Profiles such as O-Ring seal grooves may also be 3D printed.

Whilst particularly advantageous in the field of aircraft components such as fuel pipes, there are other composite components for which the described methods can be used.

The manufacturing method allows an infinite number of shapes and sizes of mandrel to be made at relatively low cost and in a less labour-intensive manner than conventional methods. Also, no costs are associated with storage and ownership of a large array of mandrels and associated tooling.

## Claims

1. A method of forming a composite component comprising:
forming a mandrel by additive manufacturing, the mandrel defining a shape for the component;
providing a composite material around the mandrel to form a body of the component;
curing the component body to produce the component, the mandrel forming a part of the component.

2. The method of claim 1, wherein the step of providing comprises wrapping layers of composite material around the mandrel.

3. The method of claim 1, wherein the step of providing comprises fitting a sleeve of composite material over the mandrel.

4. The method of any previous claim, further comprising applying adhesive between the mandrel and the composite material.

5. The method of any of claims 1 to 3, wherein the mandrel is provided with a surface finish to prevent adhesion to the composite material.

6. The method of any previous claim, wherein the composite material comprises carbon fibres or glass fibres, and resin.

7. A composite component comprising a mandrel defining a shape of the component, and a composite material formed around the mandrel.

8. The composite component of claim 7, further comprising adhesive between the mandrel and the composite material.

9. The composite component of claim 7 or 8, wherein the component comprises a tubular body and a flange at one or each end of the tubular body.

10. The composite component of any of claims 7 to 9, wherein the shape of the component is non-linear.
